# EUROPÄISCHE PATENTSCHRIFT

(11) **EP 2 025 442 B1**
(45) Veröffentlichungstag und Bekanntmachung des Hinweises auf die Patenterteilung: **27.06.2012**
(21) Anmeldenummer: 08012971.1
(22) Anmeldetag: 18.07.2008
(51) Int. Cl.: B23K 1/20, B23K 3/08, B23K 3/06, B05C 5/00

(54) **Verfahren zum Beloten eines Werkstückes durch einen Flüssigkeitsvorhang ; Vorrichtung zur Durchführung des Verfahrens mit einem Giesshälter**
Method for soldering a workpiece through the use of a solder curtain ; Device for carrying out the method with a molding part
Procédé de brasage d'une pièce passant à travers un rideau de brasure ; Dispositif de mise en oeuvre d'un tel procédé utilisant une poche de moulage

(30) Priorität: 13.08.2007 DE 102007038217
(43) Veröffentlichungstag der Anmeldung: 18.02.2009
(73) Patentinhaber: Behr GmbH & Co. KG, 70469 Stuttgart (DE)
(72) Erfinder: Trautwein, Ingo, 74321 Bietigheim-Bissingen (DE); Weber-Lanig, Thomas, 71672 Marbach (DE); Andic, Müjdat, 71083 Herrenberg (DE)
(74) Vertreter: Grauel, Andreas

(56) Entgegenhaltungen:
- EP-A- 0 868 958
- WO-A-2006/067827
- JP-A- 2 217 161
- JP-A- 3 000 152
- JP-A- 6 047 533
- US-A1- 2004 007 384

## Beschreibung

Die Erfindung betrifft ein Verfahren zum Aufbringen einer dünnen Lotschicht auf ein Werkstück nach dem Oberbegriff des Patentanspruches 1, und eine Vorrichtung zur Durchführung des Verfahrens nach dem Oberbegriff des Patentanspruches 9 (siehe, z.B., EPO 868 958).

Beim Herstellen einer Lötverbindung zwischen zwei Werkstücken muss das Lot in geeigneter Form und geeigneter Menge an der Fügestelle deponiert werden, damit beim Einleiten des Lötprozesses, d. h. beim Erwärmen der Werkstücke auf Schmelztemperatur des Lotes ein hinreichendes Lotangebot zur Verfügung steht. Aus Festigkeitsgründen wird eine möglichst dünne Lötnaht zwischen den Werkstücken angestrebt. Der Lotwerkstoff richtet sich nach dem Material der zu verlötenden Werkstücke. Bei der Verlötung von Edelstahlteilen werden vorwiegend nickel- oder kupferhaltige Lotwerkstoffe verwendet, welche in Form von Folien zwischen die zu verlötenden Teile gelegt oder in Form von Lotpasten auf die Werkstückoberfläche aufgebracht werden. Es ist auch bekannt, dass das Lot wie bei einem Lackierprozess mit einer Spritzpistole auf die Oberfläche eines Werkstückes aufgebracht wird.

Durch die DE-A 2 061 825 der Anmelderin wurde ein gelöteter Plattenwärmeübertrager bekannt, welcher aus Edelstahlplatten und zwischen diesen angeordneten Turbulenzblechen aufgebaut ist. Durch Zwischenlage von Kupferfolien als Lotmaterial werden die Platten, auch Scheiben genannt, untereinander und mit den Turbulenzblechen verlötet.

Eine weitere Anwendung von Lotfolien zum Löten von Bauteilen, insbesondere Platten von Wärmeübertragern wurde durch die DE 10 2004 013 688 A1 der Anmelderin bekannt. Die fertigen Lotfolien, vorzugsweise aus Kupfer oder einer Nickellegierung werden vor dem Löten zwischen den Platten eines Schichtwärmeübertragers deponiert.

Durch die DE-A 20 30 925 wurde ein Verfahren zum Löten von rostfreien Stählen mittels Weichlot bekannt. Hierzu werden die aus rostfreiem Stahl bestehenden Teile eines Wärmeübertragers zunächst mit einer von Weichlot benetzbaren Verkleidung versehen, sodass sie anschließend weichgelötet werden können.

Durch die DE 37 26 072 A1 wurde ein Verfahren zum Löten von Edelstahlfolien, vorzugsweise gewellten Folien für einen Metallträger eines Katalysators bekannt. Dabei wird das Lot, z. B. Nickel, Kupfer oder Silber aufgerieben, d. h. mittels eines Reibvorganges auf die zu verlötenden Folien aufgebracht. Durch den Aufreibvorgang werden Lotschichtdicken von 0,5 bis 1,5 µ erzielt. Wegen der dünnen Edelstahlfolien darf die Lotschichtdicke nicht zu groß sein, da bei einem zu hohen Lotangebot die Gefahr des so genannten Durchlegierens besteht.

Durch die DE 34 20 869 C2 wurde ein Verfahren zur Herstellung eines metallischen Schutzüberzuges für metallische Werkstücke bekannt, die einer verstärkten Korrosion, insbesondere Heißkorrosion ausgesetzt sind. Der Schutzüberzug besteht aus einer Lotschicht, welche durch Aufstreichen, Aufspritzen oder Tauchen als flüssige oder pastöse Überzugsmasse aufgebracht wird. Die Überzugsmasse besteht aus einer Aufschlämmung von pulverförmigen Überzugsmaterial, insbesondere pulverförmigem Lotmaterial in flüssigem Bindemittel, z. B. Methylcellulose. Danach wird das Werkstück mit der Lotschicht auf Schmelztemperatur des Lotes gebracht, sodass das Lot schmilzt, sich auf der Werkstückoberfläche verteilt und geringfügig in die Oberfläche eindiffundiert.

Durch die DE-A 24 35 925 wurde ein Verfahren zum Weichlöten von Edelstahlrohren bekannt, wobei zwei Rohrenden ineinander gesteckt werden und einen Lötspalt bilden, welcher mit Weichlot in Form einer Lötpaste, bestehend aus Zinn und Blei-Lötpulver, ausgefüllt wird. Während des Lötprozesses wird zusätzliches Lötmetall, z. B. in Drahtform zugeführt. Nachteilig bei einer derartigen Weichlotverbindung zwischen Edelstahlteilen ist die geringe Festigkeit der Lötverbindung.

Es ist Aufgabe der vorliegenden Erfindung, ein Verfahren der eingangs genannten Art vorzuschlagen, welches das Aufbringen einer Lotschicht mit optimaler Dicke für den anschließenden Lötprozess erlaubt. Darüber hinaus ist es Aufgabe der Erfindung, eine Vorrichtung der eingangs genannten Art vorzuschlagen, welche eine vorteilhafte Durchführung des Verfahrens erlaubt. Es ist auch Aufgabe der Erfindung, ein Werkstück optimal für den anschließenden Lötprozess vorzubereiten, insbesondere mit einer Lotschicht optimaler Dicke zu versehen.

Die Aufgabe der Erfindung wird zunächst durch die Merkmale des Patentanspruches 1 gelöst, wobei sich vorteilhafte Ausgestaltungen aus den Unteransprüchen ergeben.

Erfindungsgemäß ist vorgesehen, dass das Werkstück quer durch einen Flüssigkeitsvorhang eines Beschichtungsmediums, welches ein Lot in körniger Form enthält, geführt wird. Das den Flüssigkeitsvorhang durchquerende Werkstück wird somit gleichmäßig und kontinuierlich mit einer Lotschicht überzogen. Das Beschichtungsmedium fällt unter dem Einfluss der Schwerkraft als dünner Vorhang von oben nach unten auf die Oberfläche des sich bewegenden Werkstückes, überzieht die Oberfläche mit einem zunächst noch flüssigen Film, wobei überflüssiges Beschichtungsmedium nach unten abtropft.

Nach einer vorteilhaften Ausgestaltung der der Erfindung ist die Dicke des Flüssigkeitsvorhanges einstellbar, insbesondere auf eine Dicke, welche der Korngröße des im flüssigen Beschichtungsmedium enthaltenden Lotpulvers entspricht. Es ergibt sich somit ein äußerst dünner, jedoch noch zusammenhängender Flüssigkeitsvorhang, welcher als gleichmäßige, dünne Schicht auf dem Werkstück "abgelegt" wird. Dadurch wird eine minimale Lotschichtdicke im Bereich der Korngröße des Lotpulvers erreicht. Dies ist eine Voraussetzung für einen optimalen Lötprozess und eine Lötverbindung hoher Festigkeit.

Gemäß der Erfindung sind beide Geschwindigkeiten derart aufeinander abgestimmt, dass sich eine homogene Beschichtung auf dem Werkstück ergibt.

Nach einer weiteren vorteilhaften Ausgestaltung der Erfindung wird die Oberfläche des Werkstückes vor dem Eintritt in den Flüssigkeitsvorgang entfettet, und zwar durch Zufuhr von Wärme, d. h. durch eine so genannte Thermoentfettung. Dabei nimmt das Werkstück Wärme auf, welche es als Eigenwärme speichert. Nach dem Durchfahren des Flüssigkeitsvorhanges und erfolgter Beschichtung bewirkt diese Eigenwärme des Werkstückes eine Trocknung der Beschichtung bzw. der Lotschicht, was den Vorteil mit sich bringt, dass ein zusätzlicher Trocknungsvorgang mit Hilfe einer Trockenvorrichtung entfallen kann. Das Werkstück trocknet sich somit selbst.

Die Aufgabe der Erfindung wird auch durch eine Vorrichtung mit den Merkmalen des Patentanspruches 9 gelöst, wobei sich vorteilhafte Ausgestaltungen aus den Unteransprüchen ergeben.

Erfindungsgemäß ist ein Gießbehälter zur vorteilhaften Durchführung des Verfahrens vorgesehen, der oberhalb der zu beschichtenden Werkstücke angeordnet ist und mit dem Beschichtungsmedium gefüllt wird. Der Gießbehälter weist einen als Spalt ausgebildeten Ausfluss, einen Ausflussspalt, auf, welcher in seiner Spaltbreite einstellbar ist. Die Spaltbreite bestimmt die Dicke des Flüssigkeitsvorhanges, welcher aus dem Spalt austritt und auf das Werkstück trifft. Die Spaltbreite kann auf ein minimales Maß, vorzugsweise auf das Maß der Korngröße des im Beschichtungsmedium enthaltenden Lotpulvers eingestellt werden. Damit wird eine Beschichtung auf dem Werkstück mit einer Dicke erreicht, welche der Lotkörnung entspricht. Es kann somit eine äußerst dünne gleichmäßige Lotschicht auf dem Werkstück erzielt werden. Damit sind die Werkstücke optimal für den anschließenden Lötprozess vorbereitet.

Vorteilhafterweise ist der Gießbehälter über eine Zuführleitung mit einem Vorlagebehälter verbunden, welcher sich vorzugsweise unterhalb der Förderebene der Werkstücke befindet. Das Beschichtungsmedium wird über eine in der Zuführleitung angeordnete Pumpe aus dem Vorlagebehälter in den Gießbehälter gefördert, sodass sich für die Beschichtung ein kontinuierlicher Prozess ergibt.

Gemäß der Erfindung sind Förderbänder vorgesehen, welche die zu beschichtenden und die beschichteten Werkstücke transportieren und durch den Flüssigkeitsvorhang führen. Dabei erfolgt eine Übergabe der beschichteten Werkstücke von einem auf das andere Förderband.

In einer vorteilhaften Weiterbildung der Erfindung weist zumindest eines der Förderbänder, insbesondere beide Förderbänder, eine Förderbandebene auf, die einen Winkel α bezüglich einer horizontalen Ebene aufweist, wobei der Winkel α Werte von 0° bis 60°, insbesondere Werte von 0° bis 45°, insbesondere Werte von 0° bis 30°, insbesondere Werte von 5° bis 20° annimmt. Auf diese Weise können besonders vorteilhaft Gießschatten hinter Werkstückerhebungen verhindert werden.

In einer vorteilhaften Weiterbildung der Erfindung ist zumindest ein Lotführungselement, insbesondere ein Leitblech, vorgesehen zum Auftrag von Lot auf Werkstückabschnitte die im' Wesentlichen senkrecht zu einer Lotvorhangebene angeordnet sind. Dabei ist unter "Lotvorhangebene" eine Ebene zu verstehen, die im Wesentlichen gebildet wird durch Lot, das über eine bestimmte Breite gesehen eine gewisse Länge zurücklegt in Richtung des Erdmittelpunkts zu einem Auffangebehälter.

In einer vorteilhaften Weiterbildung der Erfindung besteht die Lotschicht aus Eisen-Basis-Lot.

Vorteilhaft ist, dass es plattenförmig, insbesondere als Platte eines Wärmeübertragers ausgebildet ist.

Vorteilhaft ist, dass es aus Edelstahl hergestellt ist.

Vorteilhaft ist, dass die Lotschicht ein Nickel-Basis-Lot und/oder ein Eisenbasislot aufweist.

Vorteilhaft ist, dass die Lotschicht ein Kupferlot aufweist.

Vorteilhaft ist, dass die Lotschicht ein Haftmittel umfasst, welches die Lotpulverschicht mit der Oberfläche des Werkstückes verbindet.

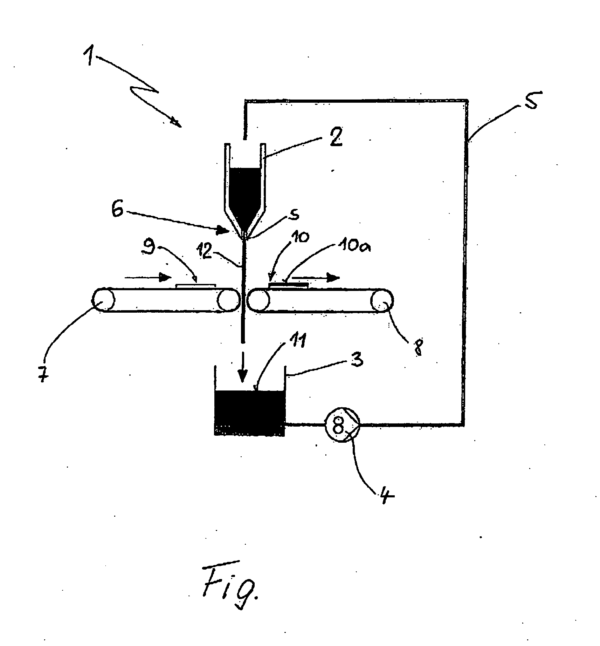

Ein Ausführungsbeispiel der Erfindung ist in der Zeichnung dargestellt und wird im Folgenden näher beschrieben.

Die einzige Figur zeigt eine Vorrichtung 1 zur Durchführung des erfindungsgemäßen Belotungs- bzw. Beschichtungsverfahrens, welches auch anhand der Vorrichtung 1 erläutert wird. Die Vorrichtung 1 umfasst einen Gießbehälter 2, einen Vorlagebehälter 3, eine Pumpe 4 sowie eine Zuführleitung 5 , welche den Vorlagebehälter 3 mit dem Gießbehälter 2 verbindet. Der Gießbehälter 2 weist an seinem unteren Ende, im Bodenbereich, eine Ausflussöffnung 6 auf, welche, gemäß der Erfindung, als Spalt mit verstellbarer Breite ausgebildet ist. Die Spaltbreite ist mit s angedeutet. Unterhalb des Gießbehälters 2 und oberhalb des Vorlagebehälters 3 sind, gemäß der Erfindung, ein erstes Förderband 7 und ein zweites Förderband 8 angeordnet, auf welchen zu beschichtende Werkstücke 9 und beschichtete Werkstücke 10 angeordnet sind. Der Vorlagebehälter 3 ist mit einem Beschichtungsmedium 11 gefüllt, welches ein flüssiges Binde- oder Haftmittel sowie ein darin enthaltenes Lotpulver, d. h. ein feinkörniges Lot enthält. Das Lotmaterial richtet sich nach dem Material des zu verlötenden Werkstückes 9 bzw. 10. Bevorzugt werden mit dem erfindungsgemäßen Verfahren Werkstücke aus Edelstahl, insbesondere Platten für einen Wärmeübertrager beschichtet. In diesem Falle werden bevorzugt ein nickelhaltiges Lot, ein so genanntes Nickel-Basis-Lot oder ein Kupfer- oder auch ein Silberlot verwendet, welches - wie erwähnt - in pulverisierter bzw. feinkörniger Form in dem Beschichtungsmedium enthalten ist. Letzteres kann bevorzugt ein wasserlöslicher Kunstharzlack sein, welcher auf die für das Verfahren erforderliche Viskosität einstellbar ist.

Das Verfahren arbeitet wie folgt: Die Pumpe 4 fördert aus dem Vorlagebehälter 11 über die Zuführleitung 5 das Beschichtungsmedium 11 in den Gießbehälter 2, aus welchem es durch den Spalt 6 als Flüssigkeitsvorhang 12 mit einer minimalen Dicke, die der Spaltbreite s entspricht, austritt und nach unten fällt. Das Werkstück 9 wird auf dem Förderband 7 in Richtung auf den Vorhang 12 transportiert, durch den Vorhang 12 hindurchgeführt, dabei beschichtet, wird dann vom Förderband 8 übernommen und als beschichtetes Werkstück 10, d. h. mit einer Lotschicht 10a versehen, weitertransportiert. Die Fördergeschwindigkeiten des Förderbänder 7, 8 und die Fließ- oder Fallgeschwindigkeit des Flüssigkeitsvorhanges 12 sind gemäß der Erfindung, derart aufeinander abgestimmt, dass sich auf dem Werkstück 9 bzw. 10 ein gleichmäßiger, dünner Beschichtungsfilm 10a ergibt, welcher der eingestellten Spaltbreite s entspricht, und damit vorzugsweise der Größe der Lotkörnung.

In der Zeichnung nicht dargestellt sind ein der Beschichtung vorgeschalteter Entfettungsvorgang des Werkstückes 9 sowie ein der Beschichtung nachgeschalteter Trocknungsvorgang des Werkstückes 10. Die Entfettung erfolgt vorzugsweise durch eine so genannte Thermoentfettung, d. h. dem Werkstück 9 wird Wärme in dem Maße zugeführt, dass ein auf der Oberfläche vorhandenes Fett verdampft wird. Dabei nimmt das Werkstück 9 Wärme auf und speichert die Wärme. Nach dem Durchlaufen des Flüssigkeitsvorhanges 12 und erfolgter Beschichtung wird das beschichtete Werkstück 10 auf dem Förderband 8 weitertransportiert, wobei es gleichzeitig trocknen kann, und zwar aufgrund der im Werkstück gespeicherten Wärme. Durch diese Eigen- oder Selbsttrocknung kann ein gesonderter Trocknungsvorgang mit entsprechender Trockenvorrichtung entfallen, wodurch das Verfahren wirtschaftlicher arbeitet. Durch die erfindungsgemäße Beschichtung des Werkstückes 10 mit einer minimalen Schichtdicke 10a kann der Lotverbrauch gegenüber herkömmlichen Belotungsverfahren, z. B. durch Spritzlackieren, reduziert werden.

## Patentansprüche

1. Verfahren zum Aufbringen einer dünnen Lotschicht (10a) auf ein Werkstück (10), wobei das Werkstück (9) quer durch einen Flüssigkeitsvorhang (12) eines Beschichtungsmediums (11), welches ein in vorzugsweise körniger Form vorliegendes Lot enthält, geführt wird, mit einem Gießbehälter (2), welcher an seinem unteren Ende eine Ausflussöffnung (6) aufweist, **dadurch gekennzeichnet, dass** die Ausflussöffnung (6) als Spalt mit verstellbarer Breite (s) ausgebildet ist und weiter **gekennzeichnet durch** ein erstes Förderband (7) zum Transportieren des Werkstücks (9) in Richtung auf den vom Gießbehälter (2) erzeugten Vorhangs und **durch** ein zweites Förderband zum Übernehmen des Werkstücks (9) nach der Beschichtung bei dem vom Gießbehälter (2) erzeugten Vorhang, wobei die Fördergeschwindigkeiten der Förderbänder (7, 8) und die Fließ- oder Fallgeschwindigkeit des Flüssigkeitsvarhanges (12) derart aufeinander abgestimmt sind, dass sich auf dem Werkstück (9) ein gleichmäßiger, dünner Beschichtungsfilm (10a) ergibt, welcher der eingestellten Spaltbreite (s) entspricht.

2. Verfahren nach Anspruch 1, **dadurch gekennzeichnet, dass** die Dicke des Flüssigkeitsvorhanges (12) einstellbar ist.

3. Verfahren nach Anspruch 2, **dadurch gekennzeichnet, dass** die Dicke des Flüssigkeitsvorhanges (12) auf einen Wert einstellbar ist, welcher der Korngröße des im Beschichtungsmedium (11) enthaltenden Lotpulvers entspricht.

4. Verfahren nach Anspruch 1, 2 oder 3, **dadurch gekennzeichnet, dass** die Fließgeschwindigkeit des Flüssigkeitsvorhanges (12) einstellbar ist.

5. Verfahren nach einem der Ansprüche 1 bis 4, **dadurch gekennzeichnet, dass** die Vorschubgeschwindigkeit des Werkstückes (9) einstellbar ist.

6. Verfahren nach Anspruch 5, **dadurch gekennzeichnet, dass** die Fließ- und die Vorschubgeschwindigkeit zur Erzielung einer optimalen Lotschichtdicke optimal aufeinander abgestimmt sind.

7. Verfahren nach einem der Ansprüche 1 bis 6, **dadurch gekennzeichnet, dass** das Werkstück (9) vor der Beschichtung durch Wärmezufuhr entfettet wird.

8. Verfahren nach Anspruch 7, **dadurch gekennzeichnet, dass** das Werkstück (10) infolge der Wärmeaufnahme und -speicherung durch Eigenwärme getrocknet wird.

9. Vorrichtung zur Durchführung des Verfahrens nach einem der Ansprüche 1 bis 8, **gekennzeichnet durch** einen Gießbehälter (2), welcher mit dem Beschichtungsmedium (11) füllbar ist, welcher an seinem unteren Ende eine Ausflussöffnung (6) aufweist, welche als Spalt mit verstellbarer Breite (s) ausgebildet ist, zum Aufbringen einer dünnen Lotschicht (10a) auf ein Werkstück (10), wobei das Werkstück (9) quer **durch** einen Flüssigkeitsvorhang (12) eines Beschichtungsmediums (11), welches ein in vorzugsweise körniger Form vorliegendes Lot, enthält, führbar ist, mit einem ersten Förderband (7) zum Transportieren des Werkstücks (9) in Richtung auf den vom Gießbehälter (2) erzeugten Vorhangs und einem zweiten Förderband (8) zum Übernehmen des Werkstücks (9) nach der Beschichtung bei dem vom Gießbehälter (2) erzeugten Vorhang, wobei die Fördergeschwindigkeiten der Förderbänder (7, 8) und die Fließ- oder Fallgeschwindigkeit des Flüssigkeitsvorhanges (12) derart aufeinander abstimmbar ist, dass sich auf dem Werkstück (9) ein gleichmäßiger, dünner Beschichtungsfilm (10a) ergibt, welcher der eingestellten Spaltbreite (s) entspricht.

10. Vorrichtung nach Anspruch 9, **dadurch gekennzeichnet, dass** der Gießbehälter (2) über eine Zufuhrleitung (5) mit einem Vorlagebehälter (3) verbunden ist.

11. Vorrichtung nach Anspruch 9 oder 10, **dadurch gekennzeichnet, dass** in der Zufuhrleitung (5) eine Förderpumpe (4) angeordnet ist.

12. Vorrichtung nach Anspruch 10 oder 11, **dadurch gekennzeichnet, dass** unterhalb des Gießbehälters (2) und oberhalb des Vorlagebehälters (3) die Förderbänder (7, 8) angeordnet sind.

13. Vorrichtung nach Anspruch 12, **dadurch gekennzeichnet, dass** zumindest eines der Förderbänder (7,8), insbesondere beide Förderbänder (7,8), eine Förderbandebene aufweisen, die einen Winkel α bezüglich einer horizontalen Ebene aufweisen, wobei der Winkel α Werte von 0° bis 60°, insbesondere Werte von 0° bis 45°, insbesondere Werte von 0° bis 30°, insbesondere Werte von 5° bis 20° annimmt.

14. Vorrichtung nach einem der vorhergehenden Ansprüche 9 bis 13, **dadurch gekennzeichnet, dass** zumindest ein Lotführungselement vorgesehen ist zum Auftrag von Lot auf Werkstückabschnitte die im Wesentlichen senkrecht zu einer Lotvorhangebene angeordnet sind.

## Claims

1. Method for applying a thin solder layer (10a) to a workpiece (10), the workpiece (9) being guided transversely through a liquid curtain (12) of a coating medium (11), which contains a solder preferably provided in granular form, having a pouring container (2), which has an outflow opening (6) on its lower end, **characterized in that** the outflow opening (6) is implemented as a gap having adjustable width (s), and further **characterized by** a first conveyor belt (7) for transporting the workpiece (9) in the direction toward the curtain generated by the pouring container (2) and by a second conveyor belt (8) for accepting the workpiece (9) after the coating in the curtain generated by the pouring container (2), the conveying speeds of the conveyor belts (7, 8) and the flowing or falling speed of the liquid curtain (12) being adapted to one another in such a manner that a uniform, thin coating film (10a), which corresponds to the set gap width (s), results on the workpiece (9).

2. Method according to claim 1, **characterized in that** the thickness of the liquid curtain (12) is settable.

3. Method according to claim 2, **characterized in that** the thickness of the liquid curtain (12) is settable to a value which corresponds to the grain size of the solder powder contained in the coating medium (11).

4. Method according to claim 1, 2, or 3, **characterized in that** the flow speed of the liquid curtain (12) is settable.

5. Method according to one of claims 1 to 4, **characterized in that** the advance speed of the workpiece (9) is settable.

6. Method according to claim 5, **characterized in that** the flow speed and the advance speed are optimally adapted to one another to achieve an optimum solder layer thickness.

7. Method according to one of claims 1 to 6, **characterized in that** the workpiece (9) is degreased by supplying heat before the coating.

8. Method according to claim 7, **characterized in that** the workpiece (10) is dried by intrinsic heat as a result of the heat absorption and heat storage.

9. Device for carrying out the method according to one of claims 1 to 8, **characterized by** a pouring container (2), which is fillable with the coating medium (11), and which has an outflow opening (6) at its lower end, which is implemented as a gap having adjustable width (s), for applying a thin solder layer (10a) to a workpiece (10), the workpiece (9) being guidable transversely through a liquid curtain (12) of a coating medium (11), which contains a solder preferably provided in granular form, having a first conveyor belt (7) for transporting the workpiece (9) in the direction toward the curtain generated by the pouring contained (2) and a second conveyor belt (8) for accepting the workpiece (9) after the coating in the curtain generated by the pouring container (2), the conveying speeds of the conveyor belts (7, 8) and the flowing and falling speed of the liquid curtain (12) being adaptable to one another in such a manner that a uniform, thin coating film (10a), which corresponds to the set gap width (s), results on the workpiece (9).

10. Device according to claim 9, **characterized in that** the pouring container (2) is connected via a supply line (5) to a storage container (3).

11. Device according to claim 9 or 10, **characterized in that** a conveyor pump (4) is arranged in the supply line (5).

12. Device according to claim 10 or 11, **characterized in that** the conveyor belts (7, 8) are arranged below the pouring container (2) and above the storage container (3).

13. Device according to claim 12, **characterized in that** at least one of the conveyor belts (7, 8), in particular both conveyor belts (7, 8), have a conveyor belt plane, which has an angle α in relation to a horizontal plane, the angle α assuming values of 0° to 60°, in particular values of 0° to 45°, in particular values of 0° to 30°, in particular values of 5° to 20°.

14. Device according to one of preceding claims 9 to 13, **characterized in that** at least one solder guiding element is provided for applying solder to workpiece sections which are arranged essentially perpendicular to a solder curtain plane.

## Revendications

1. Procédé d'application d'une mince couche de métal d'apport ou brasure (10a) sur une pièce d'usinage (10), où la pièce d'usinage (9) est guidée à travers un rideau de liquide (12) d'un milieu (11) servant à l'application du revêtement, milieu qui contient un métal d'apport se présentant de préférence sous une forme granulée, procédé comprenant un col de cygne (2) qui présente, au niveau de son extrémité inférieure, une ouverture d'écoulement (6), **caractérisé en ce que** l'ouverture d'écoulement (6) est configurée comme une fente à largeur (s) réglable et **caractérisé en outre par** une première bande transporteuse (7) servant au transport de la pièce d'usinage (9) en direction du rideau produit par le col de cygne (2), et par une deuxième bande transporteuse (8) servant à la prise en charge de la pièce d'usinage (9) après l'application du revêtement effectuée au niveau du rideau produit par le col de cygne (2), où les vitesses de transport des bandes transporteuses (7, 8) et la vitesse d'écoulement ou de chute du rideau de liquide (12) sont réglées l'une par rapport à l'autre, de manière telle qu'il en résulte un film de revêtement (10a), mince et uniforme, appliqué sur la pièce d'usinage (9), film de revêtement qui correspond à la largeur de fente (s) réglée.

2. Procédé selon la revendication 1, **caractérisé en ce que** l'épaisseur du rideau de liquide (12) est réglable.

3. Procédé selon la revendication 2, **caractérisé en ce que** l'épaisseur du rideau de liquide (12) est réglable sur une valeur qui correspond à la granulométrie de la poudre de métal d'apport contenue dans le milieu (11) servant à l'application du revêtement.

4. Procédé selon la revendication 1, 2 ou 3, **caractérisé en ce que** la vitesse d'écoulement du rideau de liquide (12) est réglable.

5. Procédé selon l'une quelconque des revendications 1 à 4, **caractérisé en ce que** la vitesse d'avance de la pièce d'usinage (9) est réglable.

6. Procédé selon la revendication 5, **caractérisé en ce que** les vitesses d'écoulement et d'avance sont réglées de façon optimale l'une par rapport à l'autre, pour que l'obtienne une épaisseur de couche de métal d'apport qui soit optimale.

7. Procédé selon l'une quelconque des revendications 1 à 6, **caractérisé en ce que** la pièce d'usinage (9) est, avant l'application du revêtement, dégraissée par rapport de chaleur.

8. Procédé selon la revendication 7, **caractérisé en ce que** la pièce d'usinage (10), suite à l'absorption et à l'accumulation de chaleur, est séchée par chaleur propre.

9. Dispositif servant à l'exécution du procédé selon l'une quelconque des revendication 1 à 8, **caractérisé par** un col de cygne (2) qui peut être rempli par le milieu (11) servant à l'application du revêtement, col de cygne qui, au niveau de son extrémité inférieure, présente une ouverture d'écoulement (6) qui est configurée comme une fente à largeur (s) réglable servant à l'application d'une mince couche de métal d'apport (10a) sur une pièce d'usinage (10), où la pièce d'usinage (9) peut être guidée à travers un rideau de liquide (12) d'un milieu (11) servant à l'application du revêtement, milieu qui contient un métal d'apport se présentant, de préférence, sous une forme granulée, dispositif comprenant une première bande transporteuse (7) servant au transport de la pièce d'usinage (9) en direction du rideau produit par le col de cygne (2), et une deuxième bande transporteuse (8) servant à la prise en charge de la pièce d'usinage (9) après l'application du revêtement effectuée au niveau du rideau produit par le col de cygne (2), où les vitesses de transport des bandes transporteuses (7, 8) et la vitesse d'écoulement ou de chute du rideau de liquide (12) sont réglées l'une par rapport à l'autre, de manière telle qu'il en résulte un film de revêtement (10a), mince et uniforme, appliqué sur la pièce d'usinage (9), film de revêtement qui correspond à la largeur de fente (s) réglée.

10. Dispositif selon la revendication 9, **caractérisé en ce que** le col de cygne (2) est relié à un récipient collecteur (3), par une conduite d'alimentation (5).

11. Dispositif selon la revendication 9 ou 10, **caractérisé en ce qu'**une pompe d'alimentation (4) est disposée dans la conduite d'alimentation (5).

12. Dispositif selon la revendication 10 ou 11, **caractérisé en ce que** les bandes transporteuses (7, 8) sont disposées au-dessous du col de cygne (2) et au-dessus du récipient collecteur (3).

13. Dispositif selon la revendication 12, **caractérisé en ce qu'**au moins l'une des bandes transporteuses (7, 8), en particulier les deux bandes transporteuses (7, 8), présentent un plan de bande transporteuse qui forme un angle α par rapport à un plan horizontal, où l'angle α prend des valeurs de 0° à 60°, en particulier des valeurs de 0°à 45°, en particulier des valeurs de 0° à 30°, en particulier des valeurs de 5° à 20°.

14. Dispositif selon l'une quelconque des revendications 9 à 13, **caractérisé en ce qu'**il est prévu au moins un élément de guidage du métal d'apport servent à l'application de métal d'apport sur des parties de pièces d'usinage qui sont disposées sensiblement de façon perpendiculaire à un plan du rideau de métal d'apport.
